Europäisches Patentamt

European Patent Office

Office européen des brevets

(11) Publication number: **0 161 353**
A1

# EUROPEAN PATENT APPLICATION

(21) Application number: 84201652.9

(22) Date of filing: 14.11.84

(51) Int. Cl.⁴: **B 67 D 1/14,** B 67 D 1/12,
F 16 K 5/10

(30) Priority: 25.04.84 NL 8401331

(43) Date of publication of application: 21.11.85
Bulletin 85/47

(84) Designated Contracting States: **AT BE CH DE FR GB IT
LI LU NL SE**

(71) Applicant: **Koutstaal, Willem, Multatulistraat 143,
NL-2524 KG The Hague (NL)**

(72) Inventor: **Koutstaal, Willem, Multatulistraat 143,
NL-2524 KG The Hague (NL)**

(74) Representative: **Timmers, Cornelis Herman Johannes et
al, EXTERPATENT Willem Witsenplein 4, NL-2596 BK
's-Gravenhage (NL)**

(54) **System for tapping carbonated drinks.**

(57) System for tapping carbonated drinks, comprising a tap
line (2) which is connected with a storage container (1) and
contains a valve, tap line (2) and valve (3) being made
without unintended discontinuities in such a way that an
essentially laminar liquid flow can occur in them.

## System for tapping carbonated drinks.

When tapping carbonated drinks, particularly when using an automatic dispensing system, there is always the problem of uncontrolled release of $CO_2$. When tapping drinks such as cola, tonic or an up-drink it is of importance that as less as possible $CO_2$ is released; on the other hand when tapping beer the formation of the wellknown layer of froth asks for a controlled release of a particular amount of $CO_2$ – although there are also countries, e.g. Great-Britain, where the customer wants a glass of beer without froth.

In practice there is no automatic tapping system which operates satisfactorily; in tapping drinks of the firstmentioned kind too much $CO_2$ is released and it is with an automatic dispensing system of the known kind, in which the valve is opened for a predetermined time by a programmed control mechanism, not possible to tap a nice glass of beer.

The invention aims to obviate these drawbacks. According to the invention the tap line and the valve are made without unintended discontinuities, in such a way that an essentially laminar liquid flow can occur in them.

The invention is based upon the insight that when designing the tap system all discontinuous changes in the resistance for the liquid flow must be eliminated by omitting sharp bends, changes in cross section, sharp edges and valves with discontinuities so that there is no turbulence and the release of $CO_2$ is prevented. Furthermore the advantage is obtained that a higher operating pressure can be used so that the dosing velocity increases.

Preferably a ballcock valve will be used which, as known, has a passage without discontinuities.

In some cases it is, however, desired that a certain amount of $CO_2$ is released, particularly when tapping beer to obtain the froth layer. In that case according to the invention an adjustable locally discontinuous obstruction is provided in the tap line which narrows the passage thereof. This obstruction can be formed by a regulating slide provided in the housing of the ballcock, which has a passage opening and can be shifted across the passage of the cock.

However, it is also possible to bring about the formation of froth in that the plug of the ballcock is linked to a control mechanism which can set this plug in a number of discrete positions. By bringing the ballcock in a programmed way in one or more positions between the completely closed and completely open position the desired amount of froth can be obtained.

One can also use a valve comprising a housing with a passage and a shutoff plug which is rotatable around a shaft including an angle with this passage, and having a bore which in the fully open position of the valve connects with the passage, with a regulating plug coaxially in the shutoff plug, extending to the bore thereof, and being provided with a concave front face joining the bore surface, by means of which the passage can be closed to a desired degree. The setting of the regulating plug determines the formation of the froth.

The invention is explained with reference to the drawings.
Fig. 1 gives a schematic illustration of a tap system built up according to the principles of the invention;
Fig. 2 is a longitudinal section through a ballcock valve used in a system according to the invention;
Figs. 3a-3c show three different positions of the adjustable obstruction used.
Figs. 4a and 4b are longitudinal sections through a different embodiment of a valve according to the invention.
Figs. 5a-5b show three discrete positions of the adjustable obstruction used.

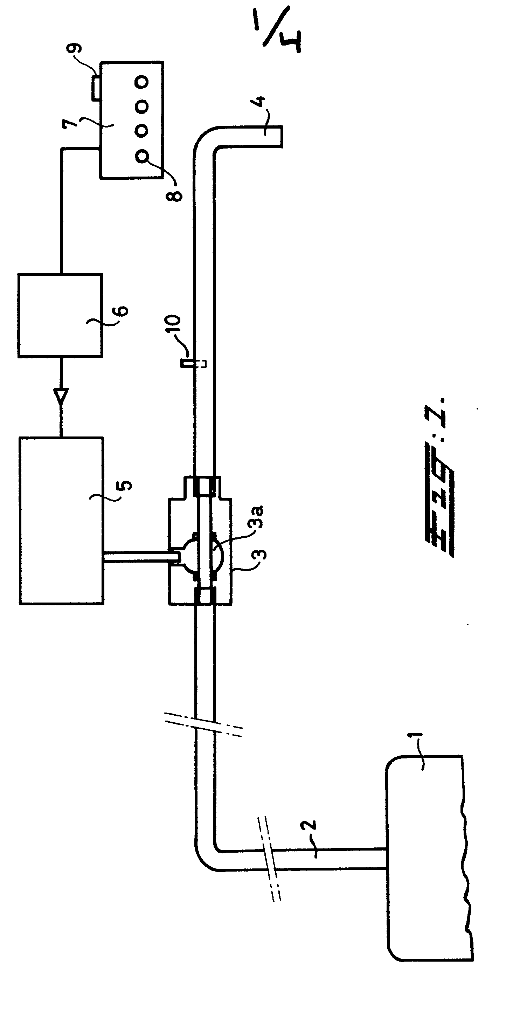

In fig. 1, reference numeral 1 designates a container under carbon dioxide pressure, for example a barrel full of cola or beer. The tap line 2 contains the valve 3 which extends to the tapping point 4. As can be seen from the figure, the whole tap line from the barrel 1 to the tapping point 4 is designed without discontinuities, so that with the valve 3 in the fully open position a laminar flow will be present in this tap line.

The valve plug 3a is connected with a setting mechanism 5, for example a setting motor which is controlled by a control unit 6 known per se, to which commands are fed from a control panel 7 which is fitted at the tapping point 4, and which can, for example, be designed with selection buttons 8 or a coin-operated control device 9.

When the tap system described above is used for tapping drinks such as cola, lemonade or tonic, every effort should be made to avoid any escape of $CO_2$, but if such a tap system is used for tapping beer, it may be desirable to have a controlled release of $CO_2$ during tapping. For this purpose and according to the invention an adjustable obstruction 10 is included in the tap line (indicated in the drawing by broken lines), by means of which the laminar flow is disrupted, eddies are generated and $CO_2$ is released.

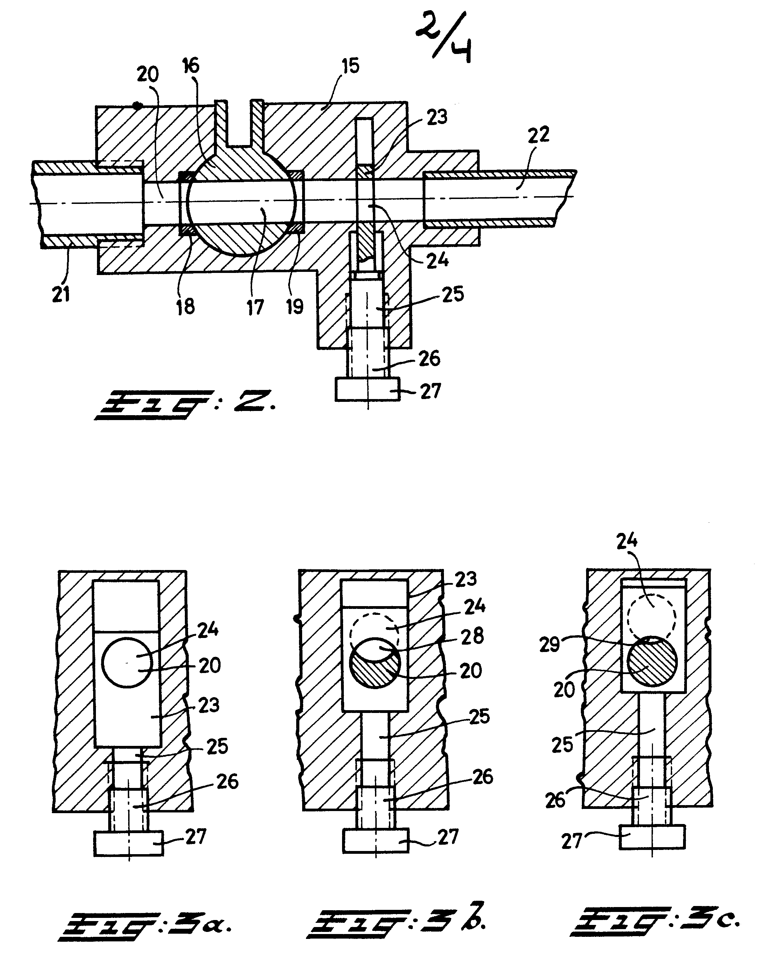

According to the invention, this obstruction is preferably combined with the ballcock valve, and fig. 2 shows an example of this. The ballcock valve according to fig. 2 comprises a housing 15 containing the plug 16 with passage 17; the sealing of the plug is by means of O-rings, and the passage 20 in the valve element connects on the one side with the supply pipe 21 leading to the container and on the other side with the line 22 extending to the tapping point.

According to the invention, the valve housing contains an adjustable obstruction, comprising a flat slide 23 having in it a round aperture 24. The slide 23 carries a screw rod 25 which fits into the internal screwthread of a screwed sleeve 26 with a control button 27 at the end. The position of the slide 23 in relation to the bore 20 can be set as desired by turning the control button.

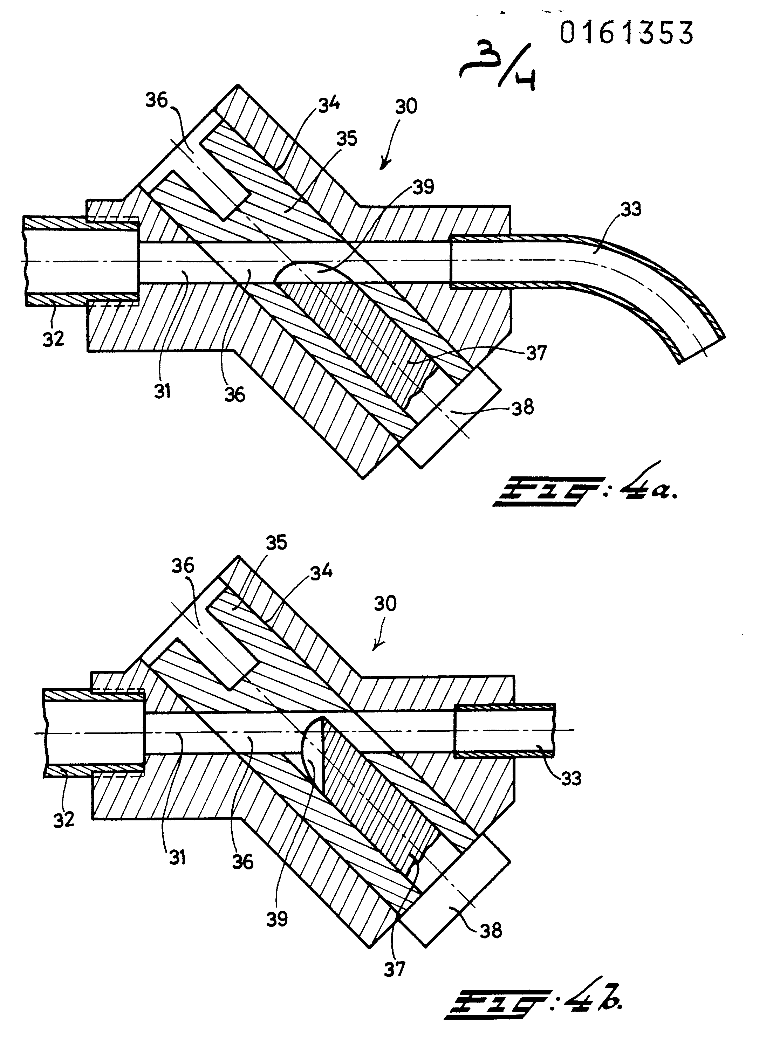

Fig. 3a shows the position in which the aperture 24 is fully in line with the passage 20, and in which the slide 23 therefore forms no obstruction. Fig. 3b shows an intermediate position at which there is only a half passage 28, which will already result in an appreciable, but controlled level of foaming; finally, fig. 3c illustrates a position in which there is only a very small passage 29. In this position, a very large quantity of foam will be produced.

It is clear that the plug 16 can be operated in the manner illustrated schematically in fig. 1 by means of a setting motor controlled by a control device.

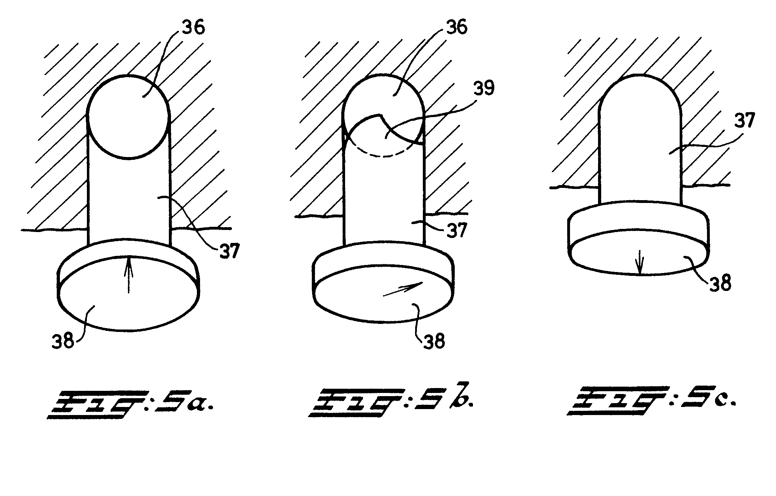

Figs. 4a and 4b show in longitudinal section a different embodiment of a valve to be used according to the invention. This valve comprises a valve housing 30, having in it a passage 31 which connects on the one side with the supply line 32 and on the other side with the tap line 33. The housing 30 contains a second bore 34, which has a plug 35 with a passage 36; the centre line of the plug 35 forms an acute angle with the centre line of the bore 31. The valve can be opened or closed by turning the plug 35 by means of a setting mechanism which acts on the top end 35a.

The adjustable obstruction used according to the invention for

the tapping of beer is formed by a second plug 37 which is provided in the plug 35 and is connected with the setting button 38; the front face 39 of this second plug 37 is concave and has a radius of curvature which corresponds to that of the bore 31.

In the position of the plug 37 as illustrated in fig. 4a, which corresponds to the position shown in fig. 5a, the passage 36 of the plug 35 is completely free. This passage 36 is closed off to a greater or lesser extent by turning the plug 37; fig. 5b shows the situation in which the front face 39 of the plug 37 partially shuts off the passage 36, and fig. 5c relates to the situation in which the front face 39 shuts off the passage 36 practically completely. Maximum foaming will then take place when tapping beer.

Of course, each tapping point has its own valve, so that for each tapping point the obstruction can be set in accordance with the circumstances prevailing for this tapping point.

Designing the tap system according to the invention has the additional advantage that the cleaning of pipes and valve is considerably simplified.

Claims:

1.  System for tapping carbonated drinks, comprising a tap line (2) which is connected with a storage container (1) and contains a valve (3), characterized in that tap line (2) and valve (3) are made without unintended discontinuities in such a way that an essentially laminar liquid flow occurs in them.

2.  System according to claim 1, characterized in that the valve (3) is formed by a ballcock.

3.  System according to claim 1 or 2, characterized in that an adjustable, locally discontinuous obstruction (10) is provided in the tap line (2) which narrows the passage thereof.

4.  System according to claim 2 or 3, characterized in that this obstruction is formed by a regulating slide (23) which is provided in the housing (15) of the ballcock, has a passage opening (24), and can be shifted across the passage of the cock.

5.  System according to claim 2, characterized in that the plug (3a) of the ballcock is linked to a control mechanism (5) which can set this plug in a number of discrete positions.

6.  System according to claim 1, characterized in that the valve (30) comprises a housing with a passage (31) and a shut off plug (35), which is rotatable around a shaft including an angle with this passage, and having a bore (36) which in the fully open position of the valve connects with the passage (31), with a regulating plug (37)    coaxially in the shutoff plug, extending to the bore thereof, and being provided with a concave front face (39) joining the bore surface, by means of which the passage (31) can be closed to a desired degree.

FIG. 1.

0161353

0161353

2/4

**Fig. 2.**

**Fig. 3a.**

**Fig. 3b.**

**Fig. 3c.**

FIG: 4a.

FIG: 4b.

0161353

3/4

**FIG:5a.**   **FIG:5b.**   **FIG:5c.**

4/4

0161353

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 055 758 (CAMERON)<br>* Figures 1,2; page 2, lines 6-30; claim 1 *<br>--- | 1 | B 67 D 1/14<br>B 67 D 1/12<br>F 16 K 5/10 |
| X | LU-A- 58 363 (EURACOM)<br>* Page 4, lines 20-35; claims 1,2 * | 1 | |
| Y | | 2-6 | |
| | --- | | |
| Y | US-A-3 612 102 (HULSEY)<br>* Figures 1,2,4,5,9,10; column 1, line 49 - column 2, line 5; column 4, lines 64-69; claims 1-4 *<br>--- | 2-6 | |
| Y | US-A-2 341 411 (OJALVO)<br>* Figures 1,2; page 1, column 2, line 46 - page 2, column 1, line 25 * | 3,4,6 | |

TECHNICAL FIELDS SEARCHED (Int. Cl.4)

B 67 D
F 16 K

-----

The present search report has been drawn up for all claims

| Place of search | Date of completion of the search | Examiner |
|---|---|---|
| THE HAGUE | 22-07-1985 | DEUTSCH J.P.M. |